# EUROPEAN PATENT SPECIFICATION

(11) **EP 0 530 341 B1**
(45) Date of publication and mention of the grant of the patent: **02.10.1996**
(21) Application number: 92906624.9
(22) Date of filing: 18.03.1992
(51) Int. Cl.: F02P 5/15

(54) **KNOCK REGULATION IN A SPARK-IGNITED INTERNAL COMBUSTION ENGINE**
KLOPFREGELUNG IN EINER FUNKENGEZÜNDETEN BRENNKRAFTMASCHINE
REGULATION DES DETONATIONS D'UN MOTEUR A COMBUSTION INTERNE A ALLUMAGE PAR ETINCELLES

(30) Priority: 22.03.1991 DE 4109432
(43) Date of publication of application: 10.03.1993
(73) Proprietor: AUDI AG, 85002 Ingolstadt (DE)
(72) Inventor: PFALZGRAF, Bernhard, D-8070 Ingolstadt (DE); GIBTNER, Siegfried, D-8074 Gaimersheim (DE)
(74) Representative: Le Vrang, Klaus
(86) International application number: PCT/EP92/00583
(87) International publication number: WO 92/16740

(56) References cited:
- EP-A- 0 101 342
- EP-A- 0 326 193
- WO-A-89/12746
- WO-A-91/10829
- WO-A-91/14097
- DE-A- 4 008 170
- FR-A- 2 511 435
- GB-A- 2 205 608
- GB-A- 2 231 917
- GB-A- 2 231 920
- US-A- 4 829 962

## Description

The invention relates to a method for knock regulation in a spark-ignited internal combustion engine according to the preamble of claim 1.

In order to achieve optimised operation, the ignition point of a spark-ignited internal combustion engine has to be altered in accordance with the speed and load. For this purpose it is known to enter predetermined characteristic diagram values in a characteristic diagram of an electronic engine timing device in accordance with the load and speed, which values can be read out for each actual ignition point.

Another known method of achieving optimised results regarding low fuel consumption and low pollutant emission levels lies in operating the internal combustion engine in the higher load range close to the knock limit. As the position of the knock limit depends on operating parameters, in particular fuel quality, temperature and air pressure, it is known to regulate knocking on a short-term basis.

In this case, when knocking events occur, the predetermined characteristic diagram value which is read from the entered characteristic diagram is taken back by one step at a time through a relatively large retard correction value in the direction of retarded ignition as a regulation stroke to a value for an actual ignition point. In the absence of any further knocking events, the value for the actual ignition point is returned in steps through an advance correction value in the direction of advanced ignition to the predetermined characteristic diagram value.

This short-term regulation is thus related to the level of the entered predetermined characteristic diagram value. When the operating parameters are unfavourable, in particular when the fuel quality is poor, the knock limit may lie a relatively long way away from the predetermined characteristic diagram value, so that the regulation must be carried out with regulation strokes of an appropriate size and a wide regulation range. This has a disadvantageous effect on the regulation stability, so that a relatively high number of knocking combustions with sometimes violent detonations has to be tolerated for the purpose of regulation. This has an adverse effect on the material, on optimum operation and on comfort in terms of noise due to sometimes audible detonations.

The short-term regulation starts with certain regulation strokes for an operating point which has just been reached with a certain speed and load. When this operating point is left and another operating point is reached, the predetermined characteristic diagram value which is obtained from the characteristic diagram usually also changes and then corresponds to the new operating point. The short-term regulation must then also re-adapt to these new conditions, i.e. when the transition conditions are unfavourable a relatively high number of knocking combustions with sometimes violent detonations must be tolerated until the short-term regulation has re-adapted to the new operating point in the best possible manner.

In order to stabilise out of knocking operation as quickly and reliably as possible, a relatively large regulating action with relatively large retard correction values is necessary. On the other hand, however, this is disadvantageous in that it results in a retrograde regulation to an inferior operating range of the internal combustion engine with a large retard adjustment of the ignition point.

It is also known to enter a plurality of predetermined characteristic diagrams and make them available as required. For this purpose it is known, for example, to transfer from a certain characteristic diagram associated with high-grade fuel operation to a second, predetermined characteristic diagram to be used when operating with regular-grade fuel by moving a connector in the engine compartment.

It is also known to automatically carry out characteristic diagram change-overs of this kind if a high number of knocking events is recorded. However these change-overs in all cases represent an overall change or taking back of the ignition point for the entire engine characteristic diagram. In principle, the above statements regarding the increased number of knocking events when transferring from one operating point to the other also apply here. Furthermore, the regulation range is wide when transitions are made and has an unfavourable effect on the regulation stability.

The object of the invention is, in contrast, to reduce the number of knocking events, to keep the knock regulation more stable overall and to further optimise the operation of the internal combustion engine.

This object is solved by the features of claim 1.

According to claim 1, the long-term adaptation is carried out such that the predetermined characteristic diagram value is retarded by an adaptation value when knocking events occur, and the short-term regulation is carried out relative to a new predetermined ignition point value which is the predetermined characteristic diagram value plus adaptation value. The adaptation values are determined in accordance with the occurring knocking events within certain repetitive observation periods.

The reference level for the regulation is thus advantageously re-determined within the repetitive observation periods and in accordance with the knocking events occurring in these, while the regulation range and thus the knock limit should only lie a small distance from this reference level. The position of this reference level is altered by adding suitable, determined adaptation values to the values from the entered characteristic diagram. This continuous re-positioning of the reference level for the short-term regulation, together with the reduction in the regulation range, results in a reduction in the knocking events and in violent detonations, thus improving comfort in terms of noise and reducing the load on the internal combustion engine. In addition, the overall knock regulation becomes more stable and thus easier to control.

In addition to altering the regulation reference level, it is proposed that the magnitude of the regulating action or magnitude of the retard correction value be changed over from a first, large retard correction value to a smaller regulating action with a second, smaller retard correction value. This change-over to a smaller retard correction value should, however, only be carried out if it can be assumed that a substantial regulating action is unnecessary, i.e. that the risk of knocking occurring is generally not high and the internal combustion engine is already being operated in a range in which the risk of knocking occurring is low. Favourable conditions of this kind exist and are detected according to the invention if a learnt adaptation value for the long-term adaptation is already present (for the respective operating point) and a minimum number of knockless ignitions one after the other has been ascertained. It may then be assumed that a subsequently occurring detonation is more of a random event and that a general and fast displacement regulation with a large retard adjustment and a large retard correction value is unnecessary.

Owing to this type of change-over to a smaller regulating action with smaller retard correction values, a more advanced ignition angle and thus on the whole improved efficiency of the internal combustion engine is achieved on average by operating closer to the knock limit.

An observation period for determining the adaptation values or an evaluable dwell time at an operating point should amount to at least 500 ignitions.

A number of adjacent operating points in the characteristic diagram areas, corresponding to speed and load ranges, are in each case combined in a manner which is known per se, and the same predetermined characteristic diagram value is in each case associated with these. It is accordingly also possible to enter adaptation values in a correction characteristic diagram in correction characteristic diagram areas associated with the characteristic diagram areas. These characteristic diagrams may, for example, be formed as an 8 x 8 matrix with 8 defined speed points and 8 defined load points.

According to claim 2, long-term adaptation in knock regulation is carried out such that an adaptation value corresponding to the distance of the actual ignition points from the predetermined characteristic diagram value is determined for a certain operating point with a certain speed and load. This adaptation value is entered in a correction characteristic diagram when the operating point is left and output as a "learnt" correction magnitude when this operating point is reached again, and the predetermined characteristic diagram value is acted upon by this for the anticipatory control of the short-term regulation.

The knock regulation thus comprises a kind of automatic learning process in which, in addition to the predetermined characteristic diagram values which are entered at the outset, adaptation values which are dependent on operating parameters are determined and stored for each operating point which is reached. An adaptation value of this kind may, for example, be the value for taking back the ignition point in the direction of retarded ignition, if the vehicle had just been filled with fuel of an inferior quality. In this case the adaptation value is determined on the basis of the short-term regulation such that it corresponds approximately to the distance of the knock limit, i.e. approximately to the position of the actual ignition points from the predetermined characteristic diagram value. If this operating point had been left and is then reached again, the long-term conditions, such as the tanked fuel quality, will not usually have undergone an abrupt and fundamental change. When the operating point is reached again the predetermined characteristic diagram value is thus acted upon by the stored adaptation value, so that the regulation is controlled in an anticipatory manner and starts in the vicinity of the knock limit. In the absence of the anticipatory control, when a new operating point is reached the regulation would usually start in a knocking range corresponding to the predetermined characteristic diagram value and stabilise out of this range with a number of violent detonations.

In a simple embodiment according to claim 3 an actual regulation stroke, advantageously the last regulation stroke before the respective operating point is left, is detected and stored as the adaptation value.

A more favourable adaptation value, which provides better information on the position of the knock limit, is obtained by averaging regulation strokes. The averaging is carried out within a certain observation period or the dwell time at the operating point. According to claim 4, regulation strokes which are present when a knocking event occurs are used for the averaging, while according to claim 5 averaging is carried out over all regulation strokes within an observation period or during the dwell time at a certain operating point. Both forms of averaging produce suitable, utilisable information regarding the position of the knock limit and thus a suitable adaptation value.

As is known, the knock limit is not a precisely defined limit. It is rather to be seen as a statistical limit, with the possibility of knocking events also occurring above or below the determined statistical knock limit, according to the quality of the current combustion. Therefore, since the position of the knock limit does not in any case represent a precisely defined magnitude, it is in addition advantageous only to enter an adaptation value in the correction diagram or replace an old adaptation value by a new one if the value of the change in the averaged regulation strokes lies above the value of an established threshold. As the averaging of the regulation strokes only produces utilisable results within a certain dwell time, it is also advantageous only to store adaptation values if the number of ignitions does not fall below a certain value.

The measures so far described enable the short-term regulation through the adaptation values to be moved from the entered predetermined characteristic diagram value in the direction of retarded ignition. If the knock limit gradually moves towards the original predetermined characteristic diagram value again, for example as a result of refilling with fuel of a better quality, the adaptation values which are entered for each operating point should also be re-adapted and brought into line again. This is achieved via the features according to claim 6 by again taking back the adaptation value at a certain operating point in steps by a certain return magnitude in the direction of the original predetermined characteristic diagram value when there are no or only a few knocking events.

According to claim 1, there is a change-over from a large regulating action to a smaller one with smaller retard correction values if there is already a learnt long-time adaptation value L_{Z} for the respective operating point and no knocking event has been ascertained over a certain period or corresponding number of ignitions. If there are considerable alterations in the operating conditions, however, it is necessary to again switch back to the regulating algorithm with the greater regulating action corresponding to the large retard correction values. According to claim 7, this switch-back takes place if a knocking event again occurs during the return through advance correction values in the short-term regulation algorithm or while the correction is being worked through. It may then be assumed that, by altering the operating parameters, there is again a relatively high risk of knocking occurring, thus necessitating a substantial regulating action. If the ignition correction is effected with a relatively small retard correction value, this correction is advantageously also worked through via advance correction values which are smaller than when the correction is worked through via greater retard correction values. According to claim 8, when a knocking event is identified, a counter is set in a simple circuit measure in order to ascertain whether a knocking event is again occurring for a switch-back until the correction has been worked through.

According to claim 9, individual characteristic diagrams are advantageously associated with each cylinder of the internal combustion engine and the knocking regulation is carried out by means of the adaptation according to the invention in a cylinder-selective manner. Each cylinder can thus be separately operated in the best possible manner from the thermodynamic aspect, so that fuel consumption and the emission of pollutants can be kept to the lowest possible level.

According to claim 10, it is advantageous to retain the current adaptation value even when the internal combustion engine or the vehicle is stopped, so that the adaptation magnitude is immediately available when restarting. As a result, the knock regulation operates immediately with the desired small regulation range.

The invention is explained in detail with reference to the drawings, in which
Figure 1 is a diagram showing the position of the knock limit in accordance with the load and the ignition angle and
Figure 2 is a diagram in which the adaptation of a reference level for short-term regulation through long-term adaptation and the operation with a large and a small regulating action is plotted.

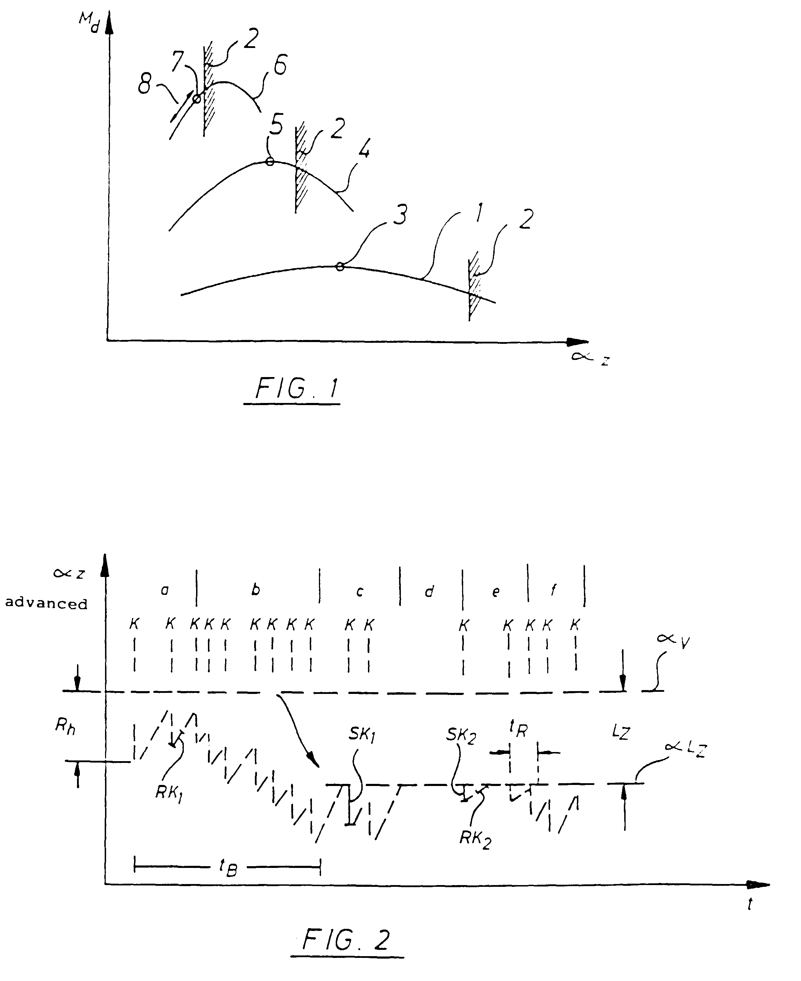

The dependency of the torque M_{d} on the ignition timing α_{z} is indicated in Figure 1. The curve 1 is relatively flat and the knock limit 2 lies a long way from the peak of the curve 1 when the load is small. The internal combustion engine is advantageously operated at point 3, i.e. at the peak, with no knocking combustions occurring.

The curve 4 represents approximately the half-load range and is curved to a greater extent, while the knock limit 2 has moved closer to the peak point 5, which is the point of optimum operation of the internal combustion engine. However, given an appropriate control, there is no risk of any knocking combustions here either.

The curve 6 represents the full-load range, with the knock limit 2 lying before the peak, i.e. there is a risk of knocking events occurring in the area between the curves 4 and 6 during optimised operation, so that the knock regulation is active for this area. The optimum operating point 7, which lies just before the knock limit 2, is marked on the curve 6. The double arrow 8 indicates the seeking movement of the predetermined ignition point value towards this point 7 by means of the short-term regulation.

The value of the ignition angle α_{z} with the direction towards advanced ignition is plotted at the top against the time axis pointing to the right in the diagram shown in Figure 2. The horizontal, broken line corresponds to a predetermined characteristic diagram value α_{V} for the ignition point from an entered characteristic diagram at a certain operating point. This predetermined characteristic diagram value α_{V} is selected such that the internal combustion engine is operated close to the knock limit under normal operating conditions and isolated knocking events may therefore occur. This state is illustrated in the period a, in which, by means of a short-term regulation which is known per se, this predetermined characteristic diagram value α_{V} is taken back by one step corresponding to a first large correction value SK₁ in the "retard" direction to a regulation stroke for an actual ignition point when knocking events K occur. If there are no further knocking events, the value for the actual ignition point is then returned upon each ignition by one step corresponding to a first advance correction value RK₁ in the direction of advanced ignition to the predetermined characteristic diagram value α_{V}.

By altering operating parameters, for example following refuelling and gradual mixing with a fuel of an inferior quality, an increased number of knocking events will occur one after the other in the period b. The actual ignition points are thereby moved one after the other further away from the original predetermined characteristic diagram value α_{V} in the "retard" direction. As shown in the period c, the short-term regulation then reaches equilibrium again at a level α_{LZ}, at a distance L_{Z} from the predetermined characteristic diagram value α_{V}, which corresponds to a changed knock limit. The value L_{Z} corresponds to a value (reduced by a predetermined small threshold) which is determined by averaging the previous regulation strokes Rₕ in an observation period t_{B}.

Upon leaving the operating point for which the track of the ignition point is illustrated in Figure 2, the value L_{Z} is stored as an adaptation value and output again immediately the operating point is reached again, so that the regulation immediately continues without any transient processes for this operating point.

The track of the short-term regulation with a relatively large regulating action through relatively large retard correction values SK₁ and advance correction values RK₁ is illustrated in the periods a, b, c. The long-term adaptation, according to which the adaptation value L_{Z}, determined by averaging in the observation period t_{B}, has already been assumed, is already active in the period c. The short-term regulation is therefore no longer related to the predetermined characteristic diagram value α_{V}, but rather to the level α_{LZ}, which is α_{V} reduced by the adaptation value L_{Z}, so that there is now also a re-regulation to this long-term level α_{LZ}. (This long-time level α_{LZ} is only altered relatively slowly.)

The adaptation value L_{Z} for the short-term regulation has therefore already been assumed in the period c and no more knocking events have been ascertained in the subsequent period d (a certain minimum number of ignitions being required for the period d). When these conditions occur there is a change-over to a smaller regulating action with correspondingly smaller retard correction values SK₂ and smaller return values as advance correction values RK₂.

This case is illustrated for the detonation K, which occurs at the beginning of the period e, in which the ignition angle is only taken back slightly by the value SK₂ with a return corresponding to the values RK₂. If no further knocking events occur during the return, the short-term regulation remains switched to the smaller action magnitudes. Should, however, a knocking event K occur during a return (in the present case at the end of the period e), there will again be a change-over to the values SK₁ and RK₁ for the greater regulating action, as illustrated in the period f.

A graduated regulating action is thus carried out which on average results in more advanced ignition points and thus improved efficiency of the internal combustion engine operation.

## Claims

1. Method for knock regulation of the ignition timing in a spark-ignited internal combustion engine,
with a short-term regulation, in which a predetermined characteristic diagram value (αᵥ) for the ignition point is read from a characteristic diagram, which is entered in accordance with operating parameters, at a certain operating point of the internal combustion engine,
when knocking events (K) occur, the actual ignition point is determined as the predetermined characteristic diagram value (αᵥ) modified one step at a time by a first retard correction value (SK₁) in the "retard" direction as a regulation stroke (Rₕ), and
in the absence of any further knocking events (K), the actual ignition point is returned one step at a time by an advance correction value (RK₁) in the "advance" direction as a regulation stroke (Rₕ) to the predetermined characteristic diagram value (αᵥ), and
with an additional long-term adaption,
characterised in that the long-term adaption is carried out such that the predetermined characteristic diagram value (αᵥ) is retarded by an adaption value (L_{Z}) when knocking events (K) occur, so that the short-term regulation is corrected on a long-term basis relative to a new predetermined ignition point value α_{LZ} which is the predetermined characteristic diagram value (αᵥ) plus the adaptation value (L_{Z}),
that the adaptation values (L_{Z}) are determined and learnt in accordance with the occurring knocking events (K) within certain repetitive observation periods (t_{B}),
and that if a learnt adaptation value (L_{Z}) for the long-term adaptation is present and after a minimum number of knockless ignitions has been ascertained, instead of the first retard correction value (SK₁), the short-term regulation is operated with a second, smaller retard correction value (SK₂), so that, owing to the smaller regulating action, a more advanced ignition angle and thus improved efficiency of the internal combustion engine is achieved on average with respect to the operation with the first retard correction value (SK₁).

2. Method according to claim 1, characterised in that the adaptation value (L_{Z}) corresponds approximately to the distance of the actual ignition points from the predetermined characteristic diagram value for the certain operating point, this adaptation value (L_{Z}) is entered in an associated correction characteristic diagram when the operating point is left and output as a "learnt" correction magnitude when this operating point is reached again, and the predetermined characteristic diagram value is acted upon by this.

3. Method according to claim 1 or 2, characterised in that an actual regulation stroke (Rₕ) is used as the adaptation value (L_{Z}) before the operating point is left.

4. Method according to claim 1 or 2, characterised in that the adaptation value (L_{Z}) is obtained by averaging the regulation strokes (R_{H}) which are present when a knocking event occurs in an observation period (t_{B}) or the dwell time at a certain operating point.

5. Method according to claim 1 or 2, characterised in that the adaptation value (L_{Z}) is obtained by averaging all the regulation strokes (Rₕ) in an observation period (t_{B}) or the dwell time at a certain operating point.

6. Method according to one of claims 1 to 5, characterised in that the adaptation value (L_{Z}) is returned in steps by a certain return magnitude in the direction of the original predetermined characteristic diagram value (α_{V}) when there are no or only a few knocking events (K) within at least one operating period (t_{B}) or the dwell time at a certain operating point.

7. Method according to one of claims 1 to 6, characterised in that the transition or switch-back from short-term regulation operation with the second, smaller retard correction values (RK₂) to operation with the first, larger retard correction values (RK₁) takes place if a knocking event again occurs during the return (t_{R}) through advance correction values (RK₂) in the short-term regulation algorithm or while the correction is being worked through.

8. Method according to claim 7, characterised in that, when a knocking event is identified, a counter is set in order to ascertain whether a knocking event is again occurring for a switch-back until the correction has been worked through (t_{R}).

9. Method according to one of claims 1 to 8, characterised in that a cylinder-selective knock regulation is provided for each cylinder of the internal combustion engine.

10. Method according to one of claims 1 to 9, characterised in that the adaptation value (L_{Z}) is retained even when the internal combustion engine or the vehicle is stopped and is immediately available as an adaptation magnitude when restarting.

## Patentansprüche

1. Verfahren zur Klopfregelung einer fremdgezündeten Brennkraftmaschine,
mit einer Kurzzeitregelung, bei der aus einem in Abhängigkeit von Betriebsparametern festabgelegten Kennfeld eine Kennfeldvorgabe (α_{V}) für den Zündzeitpunkt jeweils zu einem bestimmten Betriebspunkt der Brennkraftmaschine erfolgt,
beim Auftreten von Klopfereignissen (K) der aktuelle Zündzeitpunkt als Kennfeldvorgabe (α_{V}) um einen Schritt durch einen ersten Spät-Korrekturweg zu einem Regelhub (Rₕ) auf einen Wert in Richtung "spät" modifiziert und zurückgenommen wird, und
beim Ausbleiben von weiteren Klopfereignissen (K) der aktuelle Zündzeitpunkt jeweils um einen Schritt durch einen Früh-Korrekturwert (RK) in Richtung "früh" wieder auf die Kennfeldvorgabe ( α_{V}) hingeführt wird, und
mit einer zusätzlichen Langzeitanpassung,
dadurch gekennzeichnet, daß die Langzeitanpassung in der Weise ausgeführt ist, daß die Kennfeldvorgabe (α_{V}) bei auftretenden Klopfereignissen (K) um einen Anpassungswert (L_{Z}) zurückgenommen wird, so daß die Kurzzeitregelung auf eine neue langzeitkorrigierte Zündzeitpunktvorgabe relativ zu einem neuen vorgegebenen Zündzeitpunkt (α_{LZ}) korrigiert wird, der der vorbestimmte charakteristische Diagrammwert (α_{V}) plus Anpassungswert (L_{Z}) ist;
daß innerhalb bestimmter sich wiederholender Beobachtungszeitintervalle (t_{B}) jeweils die Anpassungswerte (L_{Z}) in Abhängigkeit der auftretenden Klopfereignisse (K) ermittelt und gelernt werden,
und daß beim Vorliegen eines bereits gelernten Anpassungswertes (L_{Z}) für die Langzeitanpassung und nach Feststellen einer Mindestanzahl klopffreier Zündungen die Kurzzeitregelung anstelle des ersten Spät-Korrekturwertes (SK₁) mit einem ebenfalls zur Verfügung gestellten zweiten kleineren Spät-Korrekturwert (SK₂) betrieben wird, so daß sich dadurch gegenüber dem Betrieb mit dem ersten Spät-Korrekturwert (SK₁) im Mittel wegen des kleineren Regeleingriffs ein früherer Zündwinkel und damit ein besserer Wirkungsgrad der Brennkraftmaschine ergibt.

2. Verfahren nach Anspruch 1, dadurch gekennzeichnet, daß für den bestimmten Betriebspunkt der Anpassungswert (L_{Z}) etwa dem Abstand der aktuellen Zündzeitpunkte von der Kennfeldvorgabe entspricht, dieser Anpassungswert (L_{Z}) beim Verlassen des Betriebspunktes in einem zugeordneten Korrekturkennfeld abgelegt wird und dieser Anpassungswert (L_{Z}) als "gelernte" Korrekturgröße beim Wiederanfahren dieses Betriebspunktes ausgegeben und die Kennfeldvorgabe damit beaufschlagt wird.

3. Verfahren nach Anspruch 1 oder 2, dadurch gekennzeichnet, daß als Anpassungswert (L_{Z}) ein aktueller Regelhub (Rₕ) vor dem Verlassen des Betriebspunktes verwendet wird.

4. Verfahren nach Anspruch 1 oder 2, dadurch gekennzeichnet, daß der Anpassungswert (L_{Z}) durch Mittelung der jeweils zum Zeitpunkt eines Klopfereignisses vorliegenden Regelhübe (R_{H}) in einem Beobachtungszeitintervall (t_{B}) oder der Verweildauer am bestimmten Betriebspunkt erhalten wird.

5. Verfahren nach Anspruch 1 oder 2, dadurch gekennzeichnet, daß der Anpassungswert (L_{Z}) durch Mittelung aller in einem Beobachtungszeitintervall (t_{B}) oder der Verweildauer am bestimmten Betriebspunkt vorliegenden Regelhübe (Rₕ) erhalten wird.

6. Verfahren nach einem der Ansprüche 1 bis 5, dadurch gekennzeichnet, daß beim Ausbleiben oder wenigen Klopfereignissen (K) innerhalb wenigstens eines Beobachtungszeitintervalls (t_{B}) oder der Verweildauer am bestimmten Betriebspunkt der Anpassungswert (L_{Z}) in Richtung auf die ursprüngliche Kennfeldvorgabe (α_{V}) jeweils schrittweise um eine bestimmte Rückführgröße zurückgeführt wird.

7. Verfahren nach einem der Ansprüche 1 bis 6, dadurch gekennzeichnet, daß der Übergang bzw. die Rückschaltung vom Betrieb der Kurzzeitregelung mit den zweiten, kleineren Spät-Korrekturwerten (RK₂) wieder auf den Betrieb mit den ersten größeren Spät-Korrekturwerten (RK₁) erfolgt, wenn während der Rückführung (t_{R}) durch Früh-Korrekturwerte (RK₂) im Algorithmus der Kurzzeitregelung bzw. dem Abbau der Korrektur erneut ein Klopfereignis auftritt.

8. Verfahren nach Anspruch 7, dadurch gekennzeichnet, daß zur Feststellung, ob erneut ein Klopfereignis für eine Rückschaltung auftritt, bei einem erkannten Klopfereignis ein Zähler gesetzt wird, solange, bis der Korrektur-Abbau abgeschlossen ist (t_{R}).

9. Verfahren nach einem der Ansprüch 1 bis 8, dadurch gekennzeichnet, daß für jeden Zylinder der Brennkraftmaschine eine zylinderselektive Klopfregelung vorgesehen ist.

10. Verfahren nach einem der Ansprüche 1 bis 9, dadurch gekennzeichnet, daß der Anpassungswert (L_{Z}) auch beim Abstellen der Brennkraftmaschine bzw. des Fahrzeuges festgehalten wird und beim Wiederanlassen sofort als Anpassungsgröße zur Verfügung steht.

## Revendications

1. Procédé pour le réglage anti-cognement de la synchronisation de l'allumage dans un moteur à combustion interne à allumage par étincelles,
comportant un réglage sur le court terme, selon lequel une valeur de courbe caractéristique prédéterminée (α_{V}) pour le point d'allumage est lue sur une courbe caractéristique, qui est introduite conformément à des paramètres de fonctionnement, à un point de fonctionnement donné du moteur à combustion interne, alors que,
quand des phénomènes de cognement (K) surviennent, le point d'allumage actuel est fixé comme étant la valeur de courbe caractéristique prédéterminée (α_{V}) modifiée, d'un pas à la fois, dans le sens du "retard", par une première valeur de correction de retard (SK₁), constituant une course de réglage (Rₕ), et que,
en l'absence de tout autre phénomène de cognement (K), le point d'allumage actuel est ramené, d'un pas à la fois, dans le sens de "l'avance", par une valeur de correction d'avance (RK₁) constituant une course de réglage (Rₕ), vers la valeur de courbe caractéristique prédéterminée (α_{V}), et
comportant une adaptation additionnelle sur le long terme,
caractérisé en ce que l'adaptation sur le long terme est réalisée d'une façon telle que la valeur de courbe caractéristique prédéterminée (α_{V}) soit retardée par une valeur d'adaptation (L_{Z}) quand des phénomènes de cognement (K) surviennent, de sorte que le réglage sur le court terme est corrigé, sur une base à long terme, par rapport à une nouvelle valeur prédéterminée de point d'allumage (αL_{Z}), qui est la valeur de courbe caractéristique prédéterminée (α_{V}) augmentée de la valeur d'adaptation (L_{Z}),
en ce que les valeurs d'adaptation (L_{Z}) sont déterminées et apprises en correspondance avec les phénomènes de cognement apparus (K), à l'intérieur de périodes d'observation répétitives données (t_{B}),
et en ce que, si une valeur d'adaptation apprise (L_{Z}) pour l'adaptation sur le long terme est présente et après qu'un nombre minimum d'allumages exempts de cognement a été constaté, le réglage sur le court terme est mis en oeuvre, non pas à l'aide de la première valeur de correction de retard (SK₁), mais avec une seconde valeur de correction de retard (SK₂) plus petite, de sorte que, grâce à l'action de réglage réduite, un angle d'allumage plus avancé et, ainsi, un meilleur rendement du moteur à combustion interne sont obtenus en moyenne par rapport à la mise en oeuvre à l'aide de la première valeur de correction de retard (SK₁).

2. Procédé selon la revendication 1, caractérisé en ce que la valeur d'adaptation (L_{Z}) correspond approximativement à la distance séparant les points d'allumage actuels de la valeur de courbe caractéristique prédéterminée pour le point de fonctionnement donné, cette valeur d'adaptation (L_{Z}) est introduite dans une courbe caractéristique de correction associée, lorsqu'on quitte le point de fonctionnement, et est délivrée en tant que grandeur de correction "apprise" lorsque ce point de fonctionnement est à nouveau atteint, et ceci influe sur la valeur de courbe caractéristique prédéterminée.

3. Procédé selon la revendication 1 ou 2, caractérisé en ce qu'une course de réglage actuelle (Rₕ) est utilisée comme la valeur d'adaptation (L_{Z}) avant que l'on quitte le point de fonctionnement.

4. Procédé selon la revendication 1 ou 2, caractérisé en ce que la valeur d'adaptation (L_{Z}) est obtenue par un calcul de la moyenne des courses de réglage (Rₕ), qui se présentent quand un phénomène de cognement survient, sur une période d'observation (t_{B}) ou la durée de séjour à un point de fonctionnement donné.

5. Procédé selon la revendication 1 ou 2, caractérisé en ce que la valeur d'adaptation (L_{Z}) est obtenue par un calcul de la moyenne de toutes les courses de réglage (Rₕ) sur une période d'observation (t_{B}) ou la durée de séjour à un point de fonctionnement donné.

6. Procédé selon l'une des revendications 1 à 5, caractérisé en ce que la valeur d'adaptation (L_{Z}) est ramenée par pas, au moyen d'une grandeur de retour donnée, en direction de la valeur de courbe caractéristique prédéterminée initiale (α_{V}), lorsqu' il n'y a pas, ou qu'il n'y a qu'un petit nombre, de phénomènes de cognement (K) à l'intérieur d'au moins une période de fonctionnement (t_{B}) ou de la durée de séjour à un point de fonctionnement donné.

7. Procédé selon l'une des revendications 1 à 6, caractérisé en ce que le passage ou la rétrocommutation de la mise en oeuvre du réglage sur le court terme, à l'aide des secondes valeurs de correction de retard plus petites (RK₂), à la mise en oeuvre à l'aide des premières valeurs de correction de retard plus grandes (RK₁), a lieu si un phénomène de cognement survient à nouveau durant le retour (t_{R}), par l'intermédiaire de valeurs de correction d'avance (RK₂) dans l'algorithme de réglage sur le court terme, ou pendant que la correction est en train de se faire.

8. Procédé selon la revendication 7, caractérisé en ce que, quand un phénomène de cognement est identifié, un compteur est remis à zéro afin de constater si un phénomène de cognement survient à nouveau pendant une rétrocommutation, jusqu'à ce que la correction ait été réalisée (t_{R}).

9. Procédé selon l'une des revendications 1 à 8, caractérisé en ce qu'un réglage anti-cognement spécifique par cylindre est prévu pour chaque cylindre du moteur à combustion interne.

10. Procédé selon l'une des revendications 1 à 9, caractérisé en ce que la valeur d'adaptation (L_{Z}) est conservée même quand le moteur à combustion interne ou le véhicule est à l'arrêt, et est immédiatement disponible en tant que grandeur d'adaptation au moment du redémarrage.
